# FASCICULE DE BREVET EUROPEEN

(11) **EP 3 206 920 B1**
(45) Date de publication et mention de la délivrance du brevet: **17.04.2019**
(21) Numéro de dépôt: 15777675.8
(22) Date de dépôt: 07.10.2015
(51) Int. Cl.: B60S 1/56

(54) **DISPOSITIF DE PRISE DE VUE D'UNE SCÈNE DE ROUTE POUR VÉHICULE AUTOMOBILE**
VORRICHTUNG ZUR AUFNAHME VON BILDERN EINER STRASSENSZENE FÜR EIN KRAFTFAHRZEUG
DEVICE FOR RECORDING IMAGES OF A ROAD SCENE FOR A MOTOR VEHICLE

(30) Priorité: 16.10.2014 FR 1459924
(43) Date de publication de la demande: 23.08.2017
(73) Titulaire: Valeo Systèmes d'Essuyage, 78322 Le Mesnil Saint Denis (FR)
(72) Inventeur: IZABEL, Vincent, 78322 La Verrière (FR); ROUSSEAU, Jean-Franois, 63500 Issoire (FR)
(74) Mandataire: Callu-Danseux, Violaine
(86) Numéro de dépôt international: PCT/EP2015/073081
(87) Numéro de publication internationale: WO 2016/058871

(56) Documents cités:
- DE-A1-102008 027 430
- DE-A1-102014 004 172

## Description

L'invention a trait au domaine de l'aide à la conduite et notamment aux caméras implantées sur certains véhicules automobiles. Plus particulièrement, l'invention a trait à un dispositif de prise de vue d'une scène de route et aux moyens mis en oeuvre pour s'assurer que la qualité de l'information d'aide à la conduite fournie au conducteur soit optimale.

Certains véhicules automobiles sont désormais équipés de moyens de prise de vue, et particulièrement de caméra, pour aider le conducteur notamment dans ses manoeuvres de stationnement et/ou de marche arrière. L'information fournie au conducteur est d'autant plus utile lorsque l'image acquise par les moyens de prise de vue est nette.

Quelle que soit la finalité d'un tel dispositif de vision arrière, la caméra vidéo est habituellement et fort logiquement implantée au niveau de la partie postérieure du véhicule. C'est ainsi qu'elle peut être intégrée directement dans la carrosserie ou dans tout élément composant la partie postérieure du véhicule, comme par exemple un pare-chocs, un aileron, une barrette de hayon, etc. La caméra vidéo est par ailleurs généralement montée de manière fixe puisque son positionnement, précédemment évoqué, est en parfaite adéquation avec sa fonction. L'implantation de la caméra vidéo est communément réalisée de façon à ce que l'extrémité de l'objectif ou l'écran de protection s'étende de manière sensiblement affleurante par rapport à son élément support. La proximité de la caméra avec l'extérieur la rend particulièrement sensible au dépôt de salissures, qui peut pénaliser la qualité de l'image acquise par la caméra.

Le document WO 2005/021329 divulgue un volet de protection mobile en déplacement entre une position de fermeture et une position d'ouverture dans lesquelles le volet est disposé respectivement devant et à l'écart de l'objectif de la caméra. Le volet de protection mobile est une pièce rapportée, pouvant ajouter à l'encombrement selon la complexité du mécanisme d'entraînement, et dont la seule fonction est de créer un écran opaque lorsque la caméra n'est pas en fonctionnement. Un tel agencement permet de protéger l'objectif, et notamment des salissures, lorsque la caméra n'exerce pas de fonction de prise de vue. On pourra toutefois noter que des salissures peuvent se déposer sur l'objectif lorsque la caméra est active et que le volet est en position d'ouverture DE102008027430 A1 et DE102014004172 A1 divulguent des dispositifs de prise de vue similaires conformément au préambule de la revendication 1.

La présente invention s'inscrit dans ce contexte et elle a pour objectif de proposer un dispositif de prise de vue d'une scène de route qui soit particulièrement efficace, c'est-à-dire qui permette l'acquisition d'images de qualité facilement exploitables par l'électronique embarqué sur le véhicule pour les présenter de façon optimale au conducteur. Dans ce but, l'invention a pour objet un dispositif de prise de vue qui comporte au moins une caméra définissant un axe optique, un élément de protection de la caméra qui entoure celle-ci et des moyens de nettoyage. L'élément de protection est monté mobile en rotation autour de la caméra et il comporte au moins deux parties distinctes aptes à prendre chacune une position de prise de vue en regard de la caméra sous l'effet de la rotation, au moins une des parties distinctes étant un écran transparent à la lumière apte à être disposé dans la position de prise de vue lorsque la caméra est en fonctionnement. Les moyens de nettoyage sont agencés pour le nettoyage de la partie transparente sur le passage de l'élément de protection mobile.

On comprend par " en aval de la lentille " une position dans laquelle l'élément de protection mobile en aval de la caméra sur l'axe optique est disposé entre la caméra et la scène de route dont la caméra permet la prise de vue.

Le fait d'avoir un élément de protection entourant la caméra permet d'assurer qu'aucune salissure ne vienne directement impacter la lentille de la caméra, celle-ci étant toujours en retrait de l'élément de protection. Et ceci est avantageusement couplé avec une mise en rotation de l'élément de protection et une disposition adéquate des moyens de nettoyage sur le chemin de cet élément de protection pour s'assurer que la partie de l'élément de protection mobile amenée à se trouver en regard de la lentille de caméra, lorsqu'une fonction de prise de vue est demandée, est propre.

Selon des caractéristiques propres à des modes de réalisation différents de l'invention, l'élément de protection mobile peut être formé par un cylindre réalisé dans un matériau intégralement transparent à la lumière, éventuellement réalisé en polycarbonate, ou bien l'élément de protection mobile peut comporter, outre l'écran transparent, une zone d'obturation opaque.

L'élément de protection est avantageusement monté mobile en rotation autour d'un axe perpendiculaire à l'axe optique.

Selon des caractéristiques propres à des modes de réalisation différents de l'invention, on pourra prévoir que les moyens d'entraînement en rotation de l'élément de protection comportent un moteur à sens de rotation continue, ou bien que ces moyens d'entraînement comportent un moteur à sens de rotation alternatif, entraînant l'élément de protection en rotation dans un sens puis dans l'autre entre deux positions extrêmes parmi lesquelles une des positions extrêmes correspond à la position de prise de vue en regard de la caméra.

Les moyens de nettoyage sont disposés de façon fixe par rapport à la caméra, sur le passage de l'élément de protection lorsqu'il est en déplacement.

Selon différentes caractéristiques, prises seules ou en combinaison, et propres à ces moyens de nettoyages :
- ils peuvent comporter un élément gicleur agencé pour projeter du liquide de nettoyage sur l'écran transparent dans une zone de nettoyage et un élément racleur dudit écran transparent ;
- l'élément gicleur est disposé en amont de l'élément racleur par rapport au sens de rotation de l'élément mobile de protection ;
- les moyens de nettoyage sont portés par un carter additionnel ; et l'élément gicleur consiste en des buses de projection portées par un bras solidaire du carter qui s'étend parallèlement à l'axe de rotation du cylindre ;
- les moyens de nettoyage comportent en outre au moins un élément chauffant disposé à proximité de l'élément mobile de protection ;
- les moyens de nettoyage sont montés sur la face interne d'un élément de structure du véhicule ;
- l'élément racleur est monté sur la une partie de l'élément de structure amovible et accessible depuis l'extérieur du véhicule.

On pourra prévoir que ces moyens de nettoyage comportent en outre au moins un élément chauffant.

L'invention concerne également un procédé de prise de vue d'une scène de route dans un véhicule automobile, dans lequel on commande d'une part la rotation d'un élément mobile de protection disposé autour d'une caméra de prise de vue pour amener, lorsque l'on souhaite réaliser une fonction de prise de vue, une partie de l'élément de protection formant un écran transparent dans une zone de prise de vue en regard de la caméra, et dans lequel on commande d'autre part le déclenchement d'une fonction de nettoyage au passage de l'élément mobile de protection dans une zone de nettoyage lors de ladite rotation de l'élément de protection.

On pourra prévoir, selon des caractéristiques distinctes selon le mode de réalisation de l'invention, que le déclenchement d'une fonction de nettoyage se fasse après la prise de vue, ou bien qu'il se fasse avant celle-ci.

D'autres caractéristiques et avantages de la présente invention apparaitront plus clairement à l'aide de la description et des dessins parmi lesquels :
- la figure 1 est une vue en perspective, vue de l'extérieur d'un véhicule, d'un dispositif de prise de vue selon un premier mode de réalisation, escamoté derrière un élément de carrosserie, comportant au moins une caméra entouré d'un élément de protection, la lentille de la caméra étant rendu visible à travers un orifice de la carrosserie ;
- la figure 2 est une vue en perspective, de côté, d'éléments du dispositif de prise de vue de la figure 1, parmi lesquels une caméra, un élément de protection mobile, et des moyens d'entraînement en rotation de cet élément de protection mobile ;

- la figure 3 est une vue en perspective, par le dessus, du dispositif de prise de vue dans son ensemble, comportant les éléments de la figure 2 ainsi qu'un élément racleur et un élément gicleur qui sont fixés sur un élément de carrosserie ;
- la figure 4 est une vue en perspective, vue de l'intérieur du véhicule, d'un détail de l'élément de carrosserie, apte à recevoir notamment l'élément racleur illustré sur la figure 3 ;
- les figures 5 à 8 illustrent un deuxième mode de réalisation, différent notamment du premier mode de réalisation en ce que l'élément de protection mobile comporte une zone opaque (notamment visible sur les figures 7 et 8).

Un dispositif de prise de vue 1 selon l'invention, notamment pour son application sur un véhicule automobile, comporte, quel que soit le mode de réalisation choisi, une caméra 2 pour la prise de vue d'une scène de route s'étendant à proximité du véhicule, un élément de protection mobile 4 disposé directement au voisinage de la caméra, autour de celle-ci, et apte à prendre au moins deux positions distinctes sous l'effet de l'action de moyens d'entraînement 6, et il comporte en outre des moyens de nettoyage 8 dont l'action de nettoyage permet d'assurer la netteté de chacune des prises de vue.

Le dispositif de prise de vue est implanté dans un véhicule automobile selon la fonction d'aide à la conduite à laquelle le dispositif participe, c'est-à-dire qu'il peut être implanté par exemple sur les côtés du véhicule pour une fonction de détection de choc latéral, ou au niveau du pare-chocs avant pour une fonction de détection de choc piéton. Avantageusement, le dispositif de prise de vue est implanté en partie arrière du véhicule pour réaliser une fonction de caméra de recul, utile notamment pour les manoeuvres en marche arrière et les assistances au stationnement. C'est cette implantation qui sera détaillée par la suite, et on comprendra que l'orientation des différents éléments du dispositif les uns par rapport aux autres dépendra de cette implantation. Dans le cas d'une implantation vers l'avant du véhicule, les différents éléments seraient alors dans une orientation différente sans sortir du contexte de l'invention.

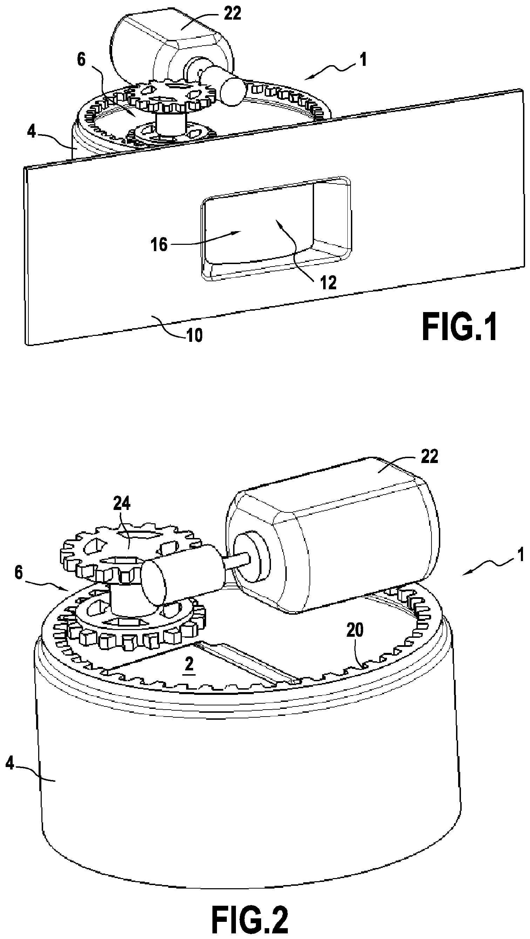

On va dans un premier temps décrire un dispositif de prise de vue selon un premier mode de réalisation, illustré sur les figures 1 à 4.

Le dispositif de prise de vue est implanté dans la structure du véhicule en retrait d'un élément de carrosserie 10, par exemple le pare-chocs arrière du véhicule. Une ouverture 12 est réalisée dans l'élément de carrosserie pour laisser libre le champ de la caméra, et une zone amovible 14 est formée dans l'élément de carrosserie autour de cette ouverture, de sorte qu'elle peut être retirée depuis l'extérieur du véhicule, avec des avantages qui seront présentés ultérieurement.

La caméra 2 comporte un dispositif optique, notamment une lentille disposée à une extrémité d'un objectif, pour l'acquisition d'images de la scène de route. La caméra est montée fixe par rapport à la structure du véhicule, en retrait de l'élément de carrosserie. On s'assure lors de la mise en place de la caméra, par des moyens d'indexage par exemple, que celle-ci est orientée correctement pour que la lentille soit disposée en regard de l'ouverture 12 de l'élément de carrosserie, tel qu'illustré sur la figure 1.

L'élément de protection mobile 4 présente la forme d'un cylindre de section circulaire et il est agencé de manière à entourer la caméra. L'élément de protection mobile est monté en rotation autour d'un axe de rotation perpendiculaire à l'axe optique. On définit la zone en regard de la lentille comme une zone de prise de vue 16, qui reste fixe quelle que soit la position angulaire de l'élément de protection en rotation. Celui-ci est intégralement transparent de sorte que l'on peut définir l'écran de protection comme une série d'écrans transparents 18 aptes à venir successivement, sous l'effet de la rotation de l'élément de protection, prendre place dans la zone de prise de vue pour permettre de placer un écran de protection des salissures devant la caméra qui par transparence ne gêne pas l'acquisition d'images par la caméra. Dans ce mode de réalisation, lorsque le dispositif est monté sur le véhicule, l'axe du cylindre formant l'élément de protection mobile s'étend sensiblement verticalement et parallèlement à l'élément de carrosserie, et le cylindre présente au moins une ouverture sur le dessous pour laisser passage aux moyens de fixation de la caméra sur l'élément de structure. L'élément de protection mobile est intégralement réalisé dans un matériau transparent à la lumière, par exemple en polycarbonate, particulièrement intéressant ici par sa grande transparence pour la qualité de la prise de vue et par sa résistance aux chocs pour la protection de la caméra.

L'élément de protection mobile est monté mobile en rotation autour de l'axe du cylindre, de manière à être entraîné par les moyens d'entraînement 6. A cet effet, l'élément de protection mobile comporte une couronne dentée 20, formant partie de moyens d'engrenage. La couronne dentée est ici venue de matière avec l'élément de protection mobile, lors du moulage de celui-ci. Elle est réalisée sur la face d'extrémité supérieure de la paroi circulaire de l'élément de protection mobile, tournée vers l'intérieur de celui-ci. Pour guider la rotation de l'élément de protection mobile et supporter le poids de cet élément, on prévoit de rapporter le cylindre sur un guide annulaire, ici non visible sur les figures, formé dans l'élément de structure.

Les moyens d'entraînement 6 comportent un moteur 22 et un ensemble de pignons 24. L'ensemble de pignons comporte un premier pignon et un deuxième pignon solidaires en rotation, le premier pignon étant en prise avec une crémaillère disposée en bout d'un arbre de sortie du moteur tandis que le deuxième pignon est en prise avec la couronne dentée de l'élément de protection mobile, le profil des dents du deuxième pignon étant complémentaire de celui des dents de la couronne. Le premier pignon est entraîné en rotation par la crémaillère lorsque le moteur est commandé en allumage et la rotation ainsi générée du deuxième pignon génère une rotation correspondante de l'élément de protection mobile.

Dans le mode de réalisation illustré, le moteur 22 est un moteur à sens d'entraînement continu, c'est-à-dire qu'il tourne toujours dans le même sens. L'entraînement en rotation correspondant de l'élément de protection mobile est toujours dans le même sens de rotation.

L'ensemble des moyens d'entraînement est disposé dans la structure du véhicule au droit de l'élément de protection mobile, c'est-à-dire dans l'encombrement vertical de cet élément de protection et de la caméra. On comprend que ceci peut faciliter l'intégration du dispositif dans la structure du véhicule, mais que pour s'adapter à la structure de tel ou tel véhicule, on pourrait prévoir un positionnement différent des moyens d'entraînement par rapport à l'élément de protection mobile, par exemple en orientant la couronne dentée vers l'extérieur et en disposant les moyens d'entraînement sur le côté. Ceci pourrait en outre permettre de prévoir un élément de protection mobile présentant une paroi transversale supérieure venant recouvrir le cylindre pour protéger plus encore la caméra.

Les moyens de nettoyage 8 sont montés sur la structure du véhicule, ici sur la face interne de l'élément de carrosserie 10, de manière à se trouver de façon fixe sur le déplacement rotatif de l'élément de protection mobile. Ils comportent ici un élément gicleur 26 et un élément racleur 28.

L'élément gicleur 26 comporte une tête d'éjection de liquide 30 et un embout 32 pour l'alimentation en liquide de nettoyage. L'élément gicleur est agencé pour pouvoir projeter, au passage de l'élément de protection mobile, de l'eau sur une zone de nettoyage 34 définie en amont, par rapport au sens de rotation de l'élément de protection mobile, de la zone de prise de vue 16. Le fait que la zone de nettoyage soit en amont de la zone de prise de vue, par rapport au sens de rotation de l'élément de protection mobile, signifie que pour un point donné sur le cylindre de l'élément de protection mobile, lors de la rotation de celui-ci, ledit point passe d'abord dans la zone de nettoyage puis dans la zone de prise de vue. On comprend que la zone de nettoyage est fixe quelle que soit la position de l'élément de protection mobile, et donc que l'on arrose dans cette zone de nettoyage différentes parties du cylindre de l'élément de protection mobile au fur et à mesure du passage de cet élément.

L'élément racleur 28 est disposé entre la zone de nettoyage et la zone de prise de vue. Il comporte une lame de caoutchouc dont une lèvre est positionnée sur la génératrice du cylindre formant l'élément de protection mobile, de manière à être au contact de la paroi circulaire du cylindre tout au long de la rotation de celui-ci. Tel qu'il vient d'être décrit, l'élément racleur est donc positionné de façon permanente en aval de l'élément gicleur, par rapport au sens de rotation de l'élément de protection mobile.

On va maintenant décrire le fonctionnement du dispositif selon le premier mode de réalisation tel qu'il vient d'être décrit, et on va pour cela partir d'un état initial dans lequel le dispositif est dans une position active de prise de vue. L'élément de protection mobile présente en aval de la lentille sur l'axe optique, c'est-à-dire dans le champ de prise de vue, un écran transparent, la transparence à la lumière de cet écran permettant la prise de vue sans interférence. Le dispositif reste dans son ensemble en position, aussi bien lors de la prise de vue que lorsque celle-ci est terminée. Le module de commande donne à cet effet une instruction de temporisation dans la rotation de l'élément de protection mobile.

L'élément de protection est rendu mobile lorsqu'une nouvelle action de prise de vue est détectée. On cherche alors à réaliser, préalablement à la fonction d'acquisition d'images, une fonction de nettoyage pour que la partie de l'élément mobile amenée à être dans la zone de prise de vue après la rotation, c'est-à-dire en regard de la lentille, soit propre et ne diminue pas la qualité des images acquises.

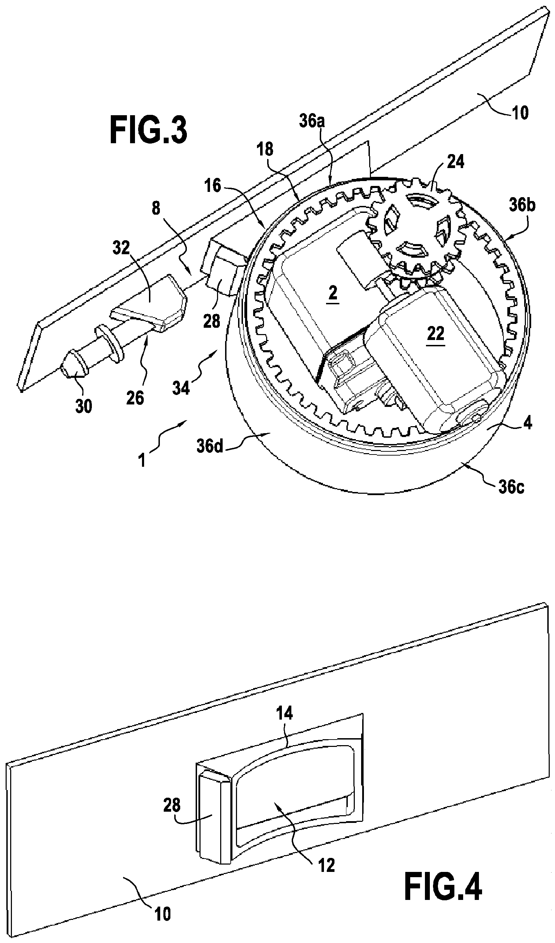

On choisit arbitrairement un fonctionnement avec une rotation de 90° de l'élément de protection pour passer d'une position de prise de vue initiale à une position de prise de vue suivante. Pour illustrer le propos, on a référencé, sur la figure 3, quatre parties découpant régulièrement l'élément de protection mobile. La première partie 36a est sur la figure dans la zone de prise de vue et la deuxième partie 36b, la troisième partie 36c et la quatrième partie 36d se succèdent dans le sens de rotation de l'élément de protection mobile.

Lorsqu'on passe à la position de prise de vue suivante, la quatrième partie 36d vient prendre place dans la zone de prise de vue, en passant au préalable par la zone de nettoyage située en amont par rapport au sens de rotation. Pendant ce temps, chaque partie s'avance d'un quart de tour vers la zone de prise de vue, la première partie 36a en regard de la lentille dans la position initiale étant laissée sale jusqu'à revenir dans la zone de nettoyage.

La fonction de nettoyage consiste principalement en une instruction d'éjection d'eau dans la zone de nettoyage transmise à l'élément gicleur. La partie de l'élément de protection mobile arrosée continue à tourner jusqu'à prendre position en regard de la lentille dans la zone de prise de vue. Au passage, l'élément de protection mobile est essuyé par contact de l'élément racleur contre la paroi du cylindre, ce qui enlève de la paroi circulaire à la fois l'eau et les salissures.

On comprend qu'ici le déclenchement d'une fonction de nettoyage se fait avant la prise de vue, lors de la rotation de l'élément de protection mobile pour amener une nouvelle partie transparente en regard de la lentille. Une partie de l'élément de protection mobile escamotée derrière l'élément de carrosserie est entraînée en rotation pour prendre position dans la zone de prise de vue. Lorsque cette partie passe au préalable dans la zone de nettoyage, de l'eau est éjectée par le gicleur et le racleur disposé en aval retire l'eau et les salissures.

On peut prévoir des cycles de nettoyage automatiques ou des cycles de nettoyage manuels, et l'on peut prévoir de coupler ces deux types de cycle. Au bout d'un certain nombre de cycles de nettoyage, il est possible de retirer depuis l'extérieur du véhicule la partie amovible de l'élément de carrosserie et avoir ainsi accès à l'élément racleur qui y est fixé. On peut ainsi le remplacer et s'assurer pour les cycles suivant que la qualité de nettoyage reste optimale.

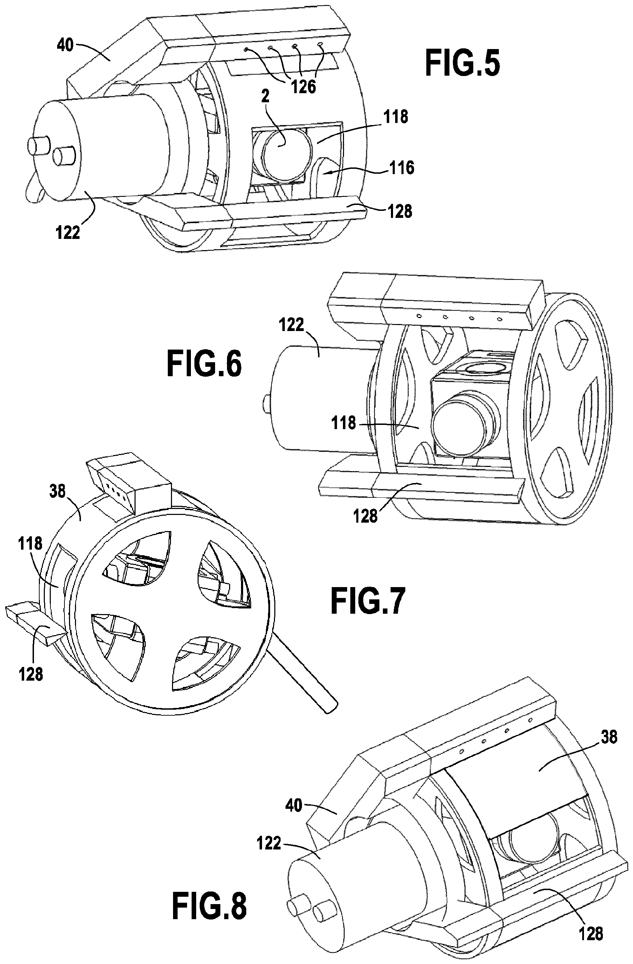

On va désormais décrire un dispositif de prise de vue selon un deuxième mode de réalisation, illustré sur les figures 5 à 8, et dans lequel on retrouve comme cela a été évoqué précédemment, une caméra 2, un élément de protection mobile 4, des moyens d'entraînement 6 et des moyens de nettoyage 8. On comprendra que l'on va employer dans la description qui va suivre de ce deuxième mode de réalisation les mêmes références numériques pour les éléments semblables, en ajoutant 100 à la référence donnée pour l'élément correspondant dans le premier mode de réalisation.

Ici, le dispositif de prise de vue diffère de ce qui a été décrit précédemment notamment structurellement au niveau des moyens d'entraînement, de l'élément de protection mobile et des moyens de nettoyage, et il diffère également fonctionnellement en ce que le déclenchement de la fonction de nettoyage est réalisée après la prise de vue.

L'élément de protection mobile prend également la forme d'un cylindre qui dans ce mode de réalisation présente des parois d'extrémité transversale, dont l'une porte un arbre pour un entraînement direct entre le moteur 122 et l'élément de protection mobile. Le cylindre est ici agencé de sorte que l'axe du cylindre, dans la position assemblée du dispositif, s'étend sensiblement horizontalement et parallèlement à l'élément de carrosserie.

La paroi circulaire du cylindre n'est pas intégralement en matériau transparent, mais elle comporte deux parties distinctes que sont un écran opaque 38 et un écran transparent à la lumière 118, agencées successivement sur la paroi circulaire dans le sens de rotation de l'élément de protection mobile. Ainsi, dans la zone de prise de vue 116 en regard de la lentille, on peut trouver, selon le déplacement de l'élément de protection mobile, une partie opaque, pour des raisons esthétiques quand on ne désire pas réaliser de prise de vue, ou une partie transparente si au contraire une prise de vue de la scène de route est demandée. On comprend que la caméra est protégée des salissures aussi bien par la partie opaque que par l'écran transparent de l'écran de protection mobile.

Les moyens de nettoyage comportent un carter 40 de fixation de l'élément gicleur 126 et de l'élément racleur 128, portés respectivement par un bras qui s'étend parallèlement à l'axe de rotation du cylindre.

L'élément racleur est inchangé, c'est-à-dire qu'il consiste en une raclette dont la lèvre est disposée sur la génératrice du cylindre.

L'élément gicleur consiste ici en une pluralité de buses de projection disposées le long du bras correspondant, parallèlement à l'axe de rotation du cylindre, les buses étant orientées pour que le liquide qu'elles éjectent rencontre le cylindre, dans une zone de nettoyage conformément à ce qui a pu être décrit précédemment. On peut observer que selon ce deuxième mode de réalisation, la zone de nettoyage est confondue avec la zone de prise de vue.

Par ailleurs, les moyens de nettoyage peuvent comporter des moyens de décongélation embarqués sur l'un et/ou l'autre des bras. Un élément chauffant est monté à cet effet à proximité de l'élément de protection mobile, et cet élément chauffant pourra être commandé en allumage par un module de commande en fonction d'informations de température détectées et analysées par le module.

Les moyens d'entraînement comportent ici uniquement un moteur en entraînement direct avec le cylindre. Ils diffèrent en outre du premier mode de réalisation en ce que le moteur est à sens de rotation alternatif, c'est-à-dire apte à passer d'une première position extrême à une deuxième position extrême dans un sens de rotation donné, puis revenir de la deuxième position extrême à la première position extrême dans le sens de rotation opposé.

A la lecture des différences structurelles qui précèdent, on peut comprendre que le fonctionnement du dispositif de prise de vue selon le deuxième mode de réalisation diffère du fonctionnement décrit ci-dessus en ce que le déclenchement d'une fonction de nettoyage a lieu après la prise de vue, dans une zone de nettoyage qui est confondue avec la zone de prise de vue. Il en résulte toutefois un principe de fonctionnement similaire en ce que des moyens de nettoyage disposés sur le passage d'un élément de protection mobile d'une caméra permettent le nettoyage d'une partie transparente dudit élément de protection mobile de manière à ce que ladite partie transparente nettoyée puisse être, immédiatement ou ultérieurement, mise en regard de la caméra sans gêner la prise de vue.

Bien entendu, diverses modifications peuvent être apportées par l'homme du métier aux structures du dispositif de prise de vue, dès lors que l'on permet d'assurer par un nettoyage tel qu'il vient d'être décrit, l'invention s'étendant notamment à tous moyens équivalents et à toute combinaison techniquement opérante de ces moyens.

## Revendications

1. Dispositif de prise de vue (1) d'une scène de route pour un véhicule automobile comportant au moins une caméra (2) définissant un axe optique, et comportant également un élément de protection (4) entourant la caméra, ledit élément de protection étant monté mobile en rotation autour de ladite caméra et comporte au moins deux parties distinctes (18, 36a à 36d ; 118) aptes à prendre chacune une position de prise de vue (16 ; 116) en regard de la caméra sous l'effet de la rotation, au moins une des parties distinctes étant un écran transparent à la lumière (18 ; 118) apte à être disposée dans la position de prise de vue lorsque la caméra est en fonctionnement, et le dispositif de prise de vue comporte des moyens de nettoyage (8) de l'écran transparent, et **caractérisé en ce que** l'élément de protection mobile (4) comporte, outre l'écran transparent (118), une zone d'obturation opaque (38).

2. Dispositif de prise de vue selon la revendication 1, **caractérisé en ce que** l'élément de protection mobile (4) est formé par un cylindre réalisé intégralement dans un matériau transparent à la lumière.

3. Dispositif de prise de vue selon la revendication 2, **caractérisé en ce que** ledit cylindre de l'élément de protection mobile (4) est réalisé en polycarbonate.

4. Dispositif de prise de vue selon l'une des revendications précédentes, **caractérisé en ce que** l'élément de protection (4) est monté mobile en rotation autour d'un axe perpendiculaire à l'axe optique.

5. Dispositif de prise de vue selon l'une des revendications précédentes, **caractérisé en ce que** les moyens d'entraînement (6) en rotation de l'élément de protection (4) comportent un moteur (22) à sens de rotation continu.

6. Dispositif de prise de vue selon l'une des revendications 1 à 4, **caractérisé en ce que** les moyens d'entraînement (6) en rotation de l'élément de protection (4) comportent un moteur (122) à sens de rotation alternatif, entraînant l'élément de protection en rotation dans un sens puis dans l'autre entre deux positions extrêmes parmi lesquelles une des positions extrêmes correspond à la position de prise de vue (116) en regard de la caméra (2).

7. Dispositif de prise de vue selon l'une des revendications précédentes, **caractérisé en ce que** les moyens de nettoyage (8) sont disposés de façon fixe par rapport à la caméra, sur le passage de l'élément de protection (4) lorsqu'il est en déplacement.

8. Dispositif de prise de vue selon la revendication 7, **caractérisé en ce que** les moyens de nettoyage (8) comportent un élément gicleur (26 ; 126) agencé pour projeter du liquide de nettoyage sur l'écran transparent (18 ; 118) à son passage dans une zone de nettoyage (34) et un élément racleur (28 ; 128) dudit écran transparent en sortie de ladite zone de nettoyage.

9. Dispositif de prise de vue selon la revendication 8, **caractérisé en ce que** l'élément gicleur (26 ; 126) est disposé en amont de l'élément racleur (28 ; 128) par rapport au sens de rotation de l'élément mobile de protection (4).

10. Dispositif de prise de vue selon l'une des revendications 8 ou 9, **caractérisé en ce que** les moyens de nettoyage (8) sont portés par un carter additionnel (40).

11. Dispositif de prise de vue selon la revendication 10, **caractérisé en ce que** l'élément gicleur (126) consiste en des buses de projection portées par un bras solidaire du carter (40) qui s'étend parallèlement à l'axe de rotation du cylindre.

12. Dispositif de prise de vue selon l'une des revendications 8 ou 9, **caractérisé en ce que** les moyens de nettoyage (8) sont montés sur la face interne d'un élément de structure (10) du véhicule.

13. Dispositif de prise de vue selon la revendication 12, **caractérisé en ce que** l'élément racleur (28) est monté sur une partie de l'élément de structure formant une zone amovible (14) accessible depuis l'extérieur du véhicule.

14. Dispositif de prise de vue selon l'une des revendications 8 à 13, **caractérisé en ce que** les moyens de nettoyage (8) comportent en outre au moins un élément chauffant disposé à proximité de l'élément mobile de protection (4).

15. Dispositif de prise de vue selon l'une des revendications 8 à 14, **caractérisé en ce que** la zone de nettoyage (34) est distincte de la zone de prise de vue (16) et **en ce qu'**elle est disposée en amont, par rapport au sens de rotation, à ladite zone de prise de vue.

16. Dispositif de prise de vue selon l'une des revendications 8 à 14, **caractérisé en ce que** la zone de nettoyage (34) et la zone de prise de vue (16) sont confondues.

17. Procédé de prise de vue d'une scène de route dans un véhicule automobile, mettant en oeuvre un dispositif de prise de vue selon la revendication 1, dans lequel on commande d'une part la rotation de l'élément mobile de protection disposé autour d'une caméra de prise de vue pour amener dans une zone de prise de vue en regard de la caméra un partie de l'élément de protection formant un écran transparent lorsque l'on souhaite réaliser une fonction de prise de vue, et dans lequel on commande d'autre part le déclenchement d'une fonction de nettoyage au passage de l'élément mobile de protection dans une zone de nettoyage lors de ladite rotation de l'élément de protection, le déclenchement d'une fonction de nettoyage ayant lieu après la prise de vue, dans une zone de nettoyage qui est confondue avec la zone de prise de vue.

## Patentansprüche

1. Vorrichtung zur Bildaufnahme (1) einer Straßenszene für ein Kraftfahrzeug, welche wenigstens eine Kamera (2) aufweist, die eine optische Achse definiert, und außerdem ein die Kamera umgebendes Schutzelement (4) aufweist, wobei das Schutzelement drehbeweglich um die Kamera herum angebracht ist und wenigstens zwei verschiedene Teile (18, 36a bis 36d; 118) aufweist, die jeweils geeignet sind, infolge der Drehung eine Bildaufnahmeposition (16; 116) gegenüber der Kamera einzunehmen, wobei wenigstens einer der verschiedenen Teile ein lichtdurchlässiger Schirm (18; 118) ist, der geeignet ist, in der Bildaufnahmeposition angeordnet zu werden, wenn die Kamera in Betrieb ist, und die Bildaufnahmevorrichtung Mittel zur Reinigung (8) des durchsichtigen Schirms aufweist, und **dadurch gekennzeichnet, dass** das bewegliche Schutzelement (4) außer dem durchsichtigen Schirm (118) einen lichtundurchlässigen Verschlussbereich (38) aufweist.

2. Vorrichtung zur Bildaufnahme nach Anspruch 1, **dadurch gekennzeichnet, dass** das bewegliche Schutzelement (4) von einem Zylinder gebildet wird, der einstückig aus einem lichtdurchlässigen Material hergestellt ist.

3. Vorrichtung zur Bildaufnahme nach Anspruch 2, **dadurch gekennzeichnet, dass** der Zylinder des beweglichen Schutzelements (4) aus Polycarbonat hergestellt ist.

4. Vorrichtung zur Bildaufnahme nach einem der vorhergehenden Ansprüche, **dadurch gekennzeichnet, dass** das Schutzelement (4) drehbeweglich um eine Achse gelagert ist, die zur optischen Achse senkrecht ist.

5. Vorrichtung zur Bildaufnahme nach einem der vorhergehenden Ansprüche, **dadurch gekennzeichnet, dass** die Mittel zum Drehantrieb (6) des Schutzelements (4) einen Motor (22) mit gleichbleibender Drehrichtung aufweisen.

6. Vorrichtung zur Bildaufnahme nach einem der Ansprüche 1 bis 4, **dadurch gekennzeichnet, dass** Mittel zum Drehantrieb (6) des Schutzelements (4) einen Motor (122) mit wechselnder Drehrichtung aufweisen, der das Schutzelement in einer Richtung und danach in der anderen zwischen zwei äußersten Positionen drehend antreibt, wobei eine der äußersten Positionen der Bildaufnahmeposition (116) gegenüber der Kamera (2) entspricht.

7. Vorrichtung zur Bildaufnahme nach einem der vorhergehenden Ansprüche, **dadurch gekennzeichnet, dass** die Reinigungsmittel (8) bezüglich der Kamera feststehend bezüglich der Kamera am Durchgang des Schutzelements (4), wenn es sich in Bewegung befindet, angeordnet sind.

8. Vorrichtung zur Bildaufnahme nach Anspruch 7, **dadurch gekennzeichnet, dass** die Reinigungsmittel (8) ein Spritzdüsenelement (26; 126), das dafür ausgelegt ist, Reinigungsflüssigkeit auf den durchsichtigen Schirm (18; 118) zu spritzen, wenn er sich durch einen Reinigungsbereich (34) bewegt, und ein Abstreifelement (28; 128) für den durchsichtigen Schirm am Ausgang des Reinigungsbereichs aufweisen.

9. Vorrichtung zur Bildaufnahme nach Anspruch 8, **dadurch gekennzeichnet, dass** das Spritzdüsenelement (26; 126), bezogen auf die Drehrichtung des beweglichen Schutzelements (4), vor dem Abstreifelement (28; 128) angeordnet ist.

10. Vorrichtung zur Bildaufnahme nach einem der Ansprüche 8 oder 9, **dadurch gekennzeichnet, dass** die Reinigungsmittel (8) von einem zusätzlichen Gehäuse (40) getragen werden.

11. Vorrichtung zur Bildaufnahme nach Anspruch 10, **dadurch gekennzeichnet, dass** das Spritzdüsenelement (126) aus Spritzdüsen besteht, die von einem mit dem Gehäuse (40) fest verbundenen Arm getragen werden, der sich parallel zur Drehachse des Zylinders erstreckt.

12. Vorrichtung zur Bildaufnahme nach einem der Ansprüche 8 oder 9, **dadurch gekennzeichnet, dass** die Reinigungsmittel (8) auf der Innenseite eines Strukturelements (10) des Fahrzeugs angebracht sind.

13. Vorrichtung zur Bildaufnahme nach Anspruch 12, **dadurch gekennzeichnet, dass** das Abstreifelement (28) auf einem Teil des Strukturelements angebracht ist, der einen lösbaren Bereich (14) bildet, der von der Außenseite des Fahrzeugs her zugänglich ist.

14. Vorrichtung zur Bildaufnahme nach einem der Ansprüche 8 bis 13, **dadurch gekennzeichnet, dass** die Reinigungsmittel (8) außerdem wenigstens ein Heizelement aufweisen, das in der Nähe des beweglichen Schutzelements (4) angeordnet ist.

15. Vorrichtung zur Bildaufnahme nach einem der Ansprüche 8 bis 14, **dadurch gekennzeichnet, dass** der Reinigungsbereich (34) vom Bildaufnahmebereich (16) verschieden ist, und dadurch, dass er, auf die Drehrichtung bezogen, vor dem Bildaufnahmebereich angeordnet ist.

16. Vorrichtung zur Bildaufnahme nach einem der Ansprüche 8 bis 14, **dadurch gekennzeichnet, dass** der Reinigungsbereich (34) und der Bildaufnahmebereich (16) zusammenfallen.

17. Verfahren zur Bildaufnahme einer Straßenszene in einem Kraftfahrzeug, bei dem eine Vorrichtung zur Bildaufnahme nach Anspruch 1 zum Einsatz kommt, wobei einerseits die Drehung des beweglichen Schutzelements, das um eine Bildaufnahmekamera herum angeordnet ist, gesteuert wird, um einen Teil des Schutzelements, der einen durchsichtigen Schirm bildet, in einen Bildaufnahmebereich gegenüber der Kamera zu bringen, wenn man eine Bildaufnahmefunktion ausführen möchte, und wobei andererseits die Auslösung einer Reinigungsfunktion beim Durchgang des beweglichen Schutzelements in einem Reinigungsbereich während der Drehung des Schutzelements gesteuert wird, wobei die Auslösung einer Reinigungsfunktion nach der Bildaufnahme stattfindet, in einem Reinigungsbereich, welcher mit dem Bildaufnahmebereich zusammenfällt.

## Claims

1. A road scene imaging device (1) for a motor vehicle, including at least one video camera (2) defining an optical axis, and including a protection element (4) around the video camera, said protection element being mounted to be mobile in rotation about said video camera and including at least two distinct parts (18, 36a to 36d; 118) each able to adopt an imaging position (16; 116) in front of the video camera as a result of the effect of the rotation, at least one of the distinct parts being a screen (18; 118) transparent to light adapted to be disposed in the imaging position when the video camera is operating, and the imaging device includes means (8) for cleaning the transparent screen and **characterized in that** the mobile protection element (4) includes an opaque masking zone (38) in addition to the transparent screen (118).

2. The imaging device as claimed in claim 1, **characterized in that** the mobile protection element (4) is a cylinder made entirely from a material transparent to light.

3. The imaging device as claimed in claim 2, **characterized in that** said cylinder of the mobile protection element (4) is made of polycarbonate.

4. The imaging device as claimed in any one of the preceding claims, **characterized in that** the protection element (4) is mounted to be mobile in rotation about an axis perpendicular to the optical axis.

5. The imaging device as claimed in any one of the preceding claims, **characterized in that** the means (6) for driving the protection element (4) in rotation include a non-reversible motor (22).

6. The imaging device as claimed in any one of claims 1 to 4, **characterized in that** the means (6) for driving the protection element (4) in rotation include a reversible motor (122) driving the protection element in rotation in one direction and then the other between two extreme positions one of which extreme positions corresponds to the imaging position (116) in front of the video camera (2).

7. The imaging device as claimed in any one of the preceding claims, **characterized in that** the cleaning means (8) are fixed relative to the video camera on the path of the protection element (4) when it moves.

8. The imaging device as claimed in claim 7, **characterized in that** the cleaning means (8) include a sprayer element (26; 126) arranged to spray cleaning liquid onto the transparent screen (18; 118) as it passes it in a cleaning zone (34) and a wiper element (28; 128) for said wiping transparent screen at the exit from said cleaning zone.

9. The imaging device as claimed in claim 8, **characterized in that** the sprayer element (26; 126) is upstream of the wiper element (28; 128) relative to the direction of rotation of the mobile protection element (4).

10. The imaging device as claimed in either one of claims 8 or 9, **characterized in that** the cleaning means (8) are carried by an additional casing (40) .

11. The imaging device as claimed in claim 10, **characterized in that** the sprayer element (126) consists of spray nozzles carried by an arm fastened to the casing (40) that extends parallel to the rotation axis of the cylinder.

12. The imaging device as claimed in either one of claims 8 or 9, **characterized in that** the cleaning means (8) are mounted on the internal face of a structural element (10) of the vehicle.

13. The imaging device as claimed in claim 12, **characterized in that** the wiper element (28) is mounted on a part of the structural element forming a removable area (14) accessible from outside the vehicle.

14. The imaging device as claimed in any one of claims 8 to 13, **characterized in that** the cleaning means (8) further include at least one heating element in the vicinity of the mobile protection element (4) .

15. The imaging device as claimed in any one of claims 8 to 14, **characterized in that** the cleaning zone (34) is separate from the imaging zone (16) and **in that** it is upstream of said imaging zone relative to the rotation direction.

16. The imaging device as claimed in any one of claims 8 to 14, **characterized in that** the cleaning zone (34) and the imaging zone (16) coincide.

17. A method of imaging a road scene in a motor vehicle implemented by an imaging device according to Claim 1, in which on the one hand the rotation of the mobile protection element disposed around an imaging video camera is controlled to move into an imaging zone in front of the video camera a part of the protection element forming a transparent screen when an imaging function is required and in which a cleaning function is triggered when the mobile protection element passes through a cleaning zone during said rotation of the protection element, the cleaning function being triggered after imaging in a cleaning zone coinciding with the imaging zone
